# EUROPÄISCHE PATENTANMELDUNG

(11) **EP 3 228 440 A1**
(43) Veröffentlichungstag der Anmeldung: **11.10.2017**
(21) Anmeldenummer: 16401024.1
(22) Anmeldetag: 05.04.2016
(51) Int. Cl.: B29C 65/44, B29C 65/56, B29C 65/72, B29C 65/16, B29K 101/12, B29K 105/06, B29K 105/08, B29K 105/10, B29K 705/00

(54) **METALL-KUNSTSTOFF-VERBUNDTEIL**

(71) Anmelder: Leister Technologies AG, 6056 Kägiswil (CH)
(72) Erfinder: Gubler, Ulrich, 6343 Buonas (CH); Keseberg, Jan, 6072 Sachseln (CH); Rauschenberger, Jens, 6024 Hildisrieden (CH); Vogler, Daniel, 6005 Luzern (CH)
(74) Vertreter: Späth, Dieter

(57) **Zusammenfassung**

Für einen festen Verbund eines Metall-Kunststoff-Schichtverbundteils (1) schlägt die Erfindung einen faserverstärkten Thermoplast und eine in den Kunststoff (3) eingebettete und in eine Faserverstärkung (10) des Kunststoffs (3) eindringende Oberflächenstruktur (9) mit beispielsweise Stiften (5) des Metalls (2) vor.

## Beschreibung

Die Erfindung betrifft ein Metall-Kunststoff-Verbundteil, dessen Kunststoff eine Faserverstärkung aufweist, mit den Merkmalen des Oberbegriffs des Anspruchs 1, sowie Verfahren zu seiner Herstellung.

Aus der Patentanmeldung EP 1 508 398 A1 ist ein Schichtverbundteil bekannt, das aus einem metallischen Formteil und einem Thermoplast besteht, der durch Aufschmelzen in einer Fügezone mit dem metallischen Formteil verbunden ist. Zum Aufschmelzen wird das metallische Formteil mit einem Laser von einer dem Thermoplast abgewandten Seite oder eine Oberfläche des metallischen Formteils durch den Thermoplast hindurch erwärmt und schmilzt den anliegenden Thermoplast an. Zum Durchstrahlen muss der Thermoplast eine hohe Transparenz für eine Wellenlänge des Lasers aufweisen. Zu einer Verbesserung der Verbindung des metallischen Formteils und des Thermoplast-Formteils kann das metallische Formteil Hinterschnitte aufweisen, die sich beim Fügen in den in der Fügezone aufgeschmolzenen Thermoplast einformen.

Die europäische Patentanmeldung EP 2 757 066 A1 offenbart einen Profilträger aus einem Metall-Kunststoff-Verbundteil. Der Kunststoff dient als Versteifungskörper und weist eine Faserverstärkung auf. Das Metallteil ist ein U-Profilstab, in dessen Schenkelwände und Jochwand nach innen stehende, flache, rechteckige Vorsprünge als Formschlusselemente geformt sind. Zum Verbinden wird der Versteifungskörper aus Kunststoff in noch unverfestigtem Zustand in das U-Profil des Metallteils eingeführt und unter Druckbeaufschlagung an dessen Innenseite angelegt. Dabei tauchen die Formschlusselemente an den Innenseiten des Metallteils in das noch weiche Material des Versteifungskörpers aus Kunststoff ein. Aus der Angabe, dass der Versteifungskörper bei der Herstellung noch unverfestigt ist, folgt, dass der Kunststoff kein Thermoplast sondern vermutlich ein Duroplast ist.

Aufgabe der Erfindung ist ein Metall-Kunststoff-Verbundteil mit gutem Verbund des Metalls und des Kunststoffs und ein Verfahren zu seiner Herstellung vorzuschlagen.

Diese Aufgabe wird durch die Merkmale des Anspruchs 1 gelöst. Das erfindungsgemäße Metall-Kunststoff-Verbundteil weist einen Kunststoff mit einer Faserverstärkung und das Metall eine in den Kunststoff eingebettete Oberflächenstruktur auf. Oberflächenstruktur ist beispielsweise im Sinne einer mikroskopischen oder makroskopischen Rauheit oder auch im Sinne von Strukturen wie Rippen, Bolzen, Gitter, Netze oder dgl. auf der Oberfläche des Metalls und/oder Riefen, Furchen, Nuten oder dgl. in der Oberfläche des Metalls zu verstehen. Als Oberflächenstruktur kann das Metall eine Rauheit im Mikrometerbereich oder größere Unebenheiten wie Vorsprünge oder Erhebungen im Bereich bis zu einem oder einigen Millimetern aufweisen. Die Angaben sind beispielhaft zur Veranschaulichung möglicher Oberflächenstrukturen des Metalls und nicht beschränkend für die Erfindung zu verstehen. Das Metall weist die Oberflächenstruktur an einer Fügefläche auf, an der es mit dem Kunststoff verbunden ist. Andere Oberflächen des Metalls ohne Kunststoff benötigen keine Oberflächenstruktur. Erfindungsgemäß ragt die Oberflächenstruktur des Metalls in den Kunststoff und in die Faserverstärkung des Kunststoffs. Es befinden sich also Fasern der Faserverstärkung des Kunststoffs in der Oberflächenstruktur des Metalls, wobei die Fasern mit dem Metall in Berührung stehen können oder sich Kunststoff zwischen den Fasern und dem Metall befindet. Durch die in die Faserverstärkung des Kunststoffs ragende Oberflächenstruktur des Metalls besteht ein Verbund durch Formschluss zwischen der Oberflächenstruktur des Metalls und Fasern der Faserverstärkung des Kunststoffs parallel zu der Fügefläche. Der Verbund durch Formschluss parallel zur Fügefläche besteht auch dann, wenn die Fasern der Faserverstärkung des Kunststoffs das Metall nicht berühren, sondern sich zwischen den Fasern, die sich in der Oberflächenstruktur des Metalls befinden, und dem Metall Kunststoff befindet. Die in die Faserverstärkung des Kunststoffs ragende Oberflächenstruktur des Metalls erhöht eine Festigkeit der Verbindung des Metalls mit dem Kunststoff zumindest gegen Schub, also gegen Kräfte, die parallel zur Fügefläche des Kunststoffs mit dem Metall wirken.

Eine Ausgestaltung der Erfindung sieht vor, dass das Metall-Kunststoff-Verbundteil ein Schichtverbundteil ist, wobei Schichten des Verbundteils bzw. das Verbundteil auch Profilträger sein können. Die Schichten bzw. das Verbundteil können zwar, müssen aber nicht, eben sein.

Eine Ausgestaltung der Erfindung sieht vor, dass der Kunststoff ein Thermoplast ist, wodurch er sich zum Verbinden mit dem Metall in einer Fügezone durch Erwärmen aufschmelzen oder jedenfalls erweichen lässt. Die Fügezone ist ein Bereich des Kunststoffs, der am Verbund mit dem Metall beteiligt bzw. in den die Oberflächenstruktur des Metalls eingebettet ist.

Eine Ausgestaltung der Erfindung sieht Langfasern und/oder Endlosfasern für die Faserverstärkung des Kunststoffs vor. Langfasern weisen eine Länge von etwa 1 - 50 mm auf, Endlosfasern sind länger, auch wenn sie nicht endlos im Sinne von unendlich lang sind. Sie können beispielsweise zu Rowings oder Gewebe, Gestricken, Gewirken oder dgl. verarbeitet sein.

Die Fasern der Faserverstärkung des Kunststoffs bestehen insbesondere aus Glas oder Kohlenstoff, allerdings ist auch anderes Fasermaterial möglich, beispielsweise Kunststofffasern aus beispielsweise Aramid, Polyester, Nylon, Steinfasern wie Basaltfasern oder Keramikfasern.

Eine Ausgestaltung der Erfindung sieht eine Faserverstärkung mit direktional im Kunststoff angeordneten Fasern vor. Beispielsweise können die Fasern unidirektional, also im Wesentlichen parallel zueinander, oder bidirektional, also einander in zwei Richtungen kreuzend angeordnet sein. Direktionale Fasern geben dem Kunststoff eine hohe Zugfestigkeit in Richtung der Fasern und dem Verbundteil eine richtungsabhängige Zug-, Biege- und Torsionsfestigkeit.

Eine Ausgestaltung der Erfindung sieht Hinterschneidungen in der Oberflächenstruktur des Metalls vor. Hinterschneidungen sind im mikroskopischen und/oder makroskopischen Bereich möglich. Sie erhöhen eine Festigkeit des Verbunds des Kunststoffs mit dem Metall gegen Zug senkrecht zur Fügefläche durch Formschluss des Kunststoffs an den Hinterschneidungen der Oberflächenstruktur des Metalls.

Eine Weiterbildung der Erfindung sieht vor, dass sich die Hinterschneidungen der Oberflächenstruktur des Metalls tiefer im Kunststoff befinden als Fasern der Faserverstärkung des Kunststoffs. Dadurch wird ein Formschluss der Fasern der Faserverstärkung des Kunststoffs mit den Hinterschneidungen der Oberflächenstruktur des Metalls gegen Zug senkrecht zur Fügefläche und dadurch eine hohe Festigkeit des Verbunds des Kunststoffs mit dem Metall gegen Zug senkrecht zur Fügefläche erreicht. Der Formschluss zwischen den Fasern der Faserverstärkung des Kunststoffs an den Hinterschneidungen der Oberflächenstruktur des Metalls besteht nicht nur, wenn die Fasern an den Hinterschneidungen eingehängt sind, sondern mittelbar über den Kunststoff auch dann, wenn sich Kunststoff zwischen den Fasern und den Hinterschneidungen befindet, selbst dann, wenn senkrecht zur Fügefläche gesehen sich die Fasern nicht unter, sondern neben den Hinterschneidungen befinden.

Zur Herstellung der Oberflächenstruktur sieht ein erfindungsgemäßes Verfahren eine Oberflächenbearbeitung des Metalls durch beispielsweise mechanische Oberflächenbearbeitung, chemische oder elektrochemische Bearbeitung oder mit Laser vor. Ziel der Oberflächenbearbeitung ist eine gewünschte Oberflächenrauigkeit und vorzugsweise die Herstellung von Hinterschneidungen durch beispielsweise pilzförmige Strukturen.

Gemäß einem erfindungsgemäßen Verfahren kann die Oberflächenstruktur auch durch Fügen am Metall des Metall-Kunststoff-Verbundteils hergestellt werden. Es können beispielsweise Metallgitter, Metallgewebe, Metallstege beispielsweise durch Schweißen am Metall angebracht werden. Auch hier ist das Anbringen von Hinterschneidungen möglich.

Eine Ausgestaltung der Erfindung sieht zum Verbinden des Kunststoffs mit dem Metall ein Aufschmelzen eines Thermoplasts als Kunststoff in zumindest der Fügezone durch Erwärmen oder mindestens ein Erwärmen auf eine Erweichungstemperatur und ein Fügen, d. h. Zusammenbringen, insbesondere Zusammendrücken oder Zusammenpressen des Metalls und des Kunststoffs vor. Dabei formt sich die Oberflächenstruktur des Metalls in die aufgeschmolzene oder zumindest erweichte Fügezone des Kunststoffs ein, so dass das Metall und der Kunststoff nach Abkühlen des Kunststoffs durch Form- und Stoffschluss verbunden sind. Bei einer Weiterbildung der Erfindung ist die Oberflächenstruktur des Metalls so tief bzw. hoch, dass sie beim Einformen in die aufgeschmolzene oder zumindest erweichte Fügezone des Kunststoffs zwischen Fasern der Faserverstärkung des Kunststoffs gelangt.

Die Erwärmung des Kunststoffs oder zumindest seiner Fügezone kann beispielsweise mit einem Laserstrahl auf das Metall erfolgen. Sofern der Kunststoff transparent für den Laserstrahl ist, kann auch die Fügefläche des Metalls durch den Kunststoff hindurch mit einem Laserstrahl erwärmt werden. Möglich sind beispielsweise auch ein Reibschweißen, eine induktive Erwärmung oder eine Erwärmung durch Wärmeübertragung.

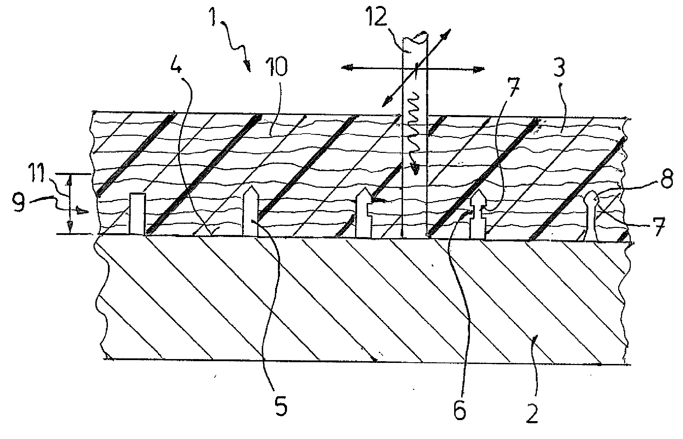

Die Erfindung wird nachfolgend anhand eines in der Zeichnung dargestellten Ausführungsbeispiels näher erläutert. Die einzige Figur zeigt einen vereinfachten und schematisierten Schnitt eines Metall-Kunststoff-Verbundteils gemäß der Erfindung.

Das in der Zeichnung dargestellte erfindungsgemäße Metall-Kunststoff-Verbundteil 1 ist ein Schichtverbundteil, das durch Fügen, also dauerhaftes Verbinden einer Metallplatte 2 und einer Kunststoffplatte 3 hergestellt ist. Die Metallplatte 2 kann allgemein auch als Metall und die Kunststoffplatte 3 allgemein als Kunststoff des Metall-Kunststoff-Verbundteils 1 aufgefasst werden. Im Ausführungsbeispiel ist der Kunststoff 3 ein Thermoplast. Anstelle von Platten können beispielsweise auch Formteile und/oder Profilstangen durch Fügen zu einem Metall-Kunststoff-Verbundteil verbunden sein. Die Aufzählung ist beispielhaft und nicht abschließend.

Von einer Fügefläche 4 der Metallplatte 2 stehen Stifte 5 ab, die an der Fügefläche 4 der Metallplatte 2 angeschweißt sind. Die Stifte 5 können allgemein auch als von der Oberfläche der Metallplatte 2 abstehende Vorsprünge aufgefasst werden. Die Fügefläche 4 ist die Oberfläche der Metallplatte 2, auf der die Kunststoffplatte 3 angeordnet ist. In der Zeichnung sind beispielhaft verschiedene Stifte 5 dargestellt, beispielsweise ein Zylinderstift, ein Zylinderstift mit Spitze, ein Stift mit einer seitlichen Aussparung 6, ein Stift mit zwei gegenüberliegenden seitlichen Aussparungen 6 und ein pilzförmiger Stift mit einem Kopf 8. Die Aussparungen 6 und der Kopf 8 bilden Hinterschneidungen 7 in der Praxis ist die Metallplatte 2 vorzugsweise mit gleichen Stiften 5 versehen, die verschiedenen Stifte in der Zeichnung veranschaulichen verschiedene Ausführungsmöglichkeiten, wobei andere als die gezeigten Ausführungsmöglichkeiten möglich sind. Beispielsweise können anstelle der Stifte 5 Rippen, Metallgewebe, ein Metallgitter usw. an der Fügefläche 4 der Metallplatte 2 angebracht sein (nicht dargestellt). Rippen können Hinterschneidungen, beispielsweise ein Tannenbaumprofil aufweisen. Gewebe oder Gitter bilden ebenfalls Hinterschneidungen. Die Aufzählung ist beispielhaft und nicht abschließend. Die Stifte 5, Rippen, Metallgewebe, Metallgitter usw. bilden eine Oberflächenstruktur 9 an der Fügefläche 4 der Metallplatte 2, die wie erläutert Hinterschneidungen 7 aufweisen kann. Anstelle einer makroskopischen Oberflächenstruktur 9 kann die Metallplatte 2 beispielsweise durch eine Rauigkeit der Fügefläche 4 eine mikroskopische Oberflächenstruktur 9 ohne oder vorzugsweise mit Hinterschneidungen aufweisen (nicht dargestellt).

Die aus einem Thermoplast bestehende Kunststoffplatte 3 weist eine Faserverstärkung 10 mit Fasern aus beispielsweise Glas oder Kohlenstoff auf. Im Ausführungsbeispiel sind die Fasern unidirektional, d. h. parallel zueinander im Kunststoff angeordnete Langfasern. Eine andere Möglichkeit der Faserverstärkung 10 sind bidirektionale, d. h. einander kreuzende Fasern oder ein Gewebe, Gewirke, Gestrick mit Lang- oder Endlosfasern (nicht dargestellt).

Zum Fügen des Metalls und des Kunststoffs wird die aus einem Thermoplast bestehende Kunststoffplatte 3 in einer Fügezone 11 durch Erwärmen aufgeschmolzen. Die Fügezone 11 ist ein an die Metallplatte 2 angrenzender Bereich der Kunststoffplatte 3, die mindestens so dick und vorzugsweise etwas dicker als die Oberflächenstruktur 9 der Metallplatte 2 tief bzw. hoch ist. Im Ausführungsbeispiel ist die Dicke der Oberflächenstruktur 9 durch eiine Höhe der Stifte 5 gegeben. Im Fall einer rauen Oberfläche als Oberflächenstruktur 9 der Metallplatte 2 entspricht eine Rautiefe der Dicke der Oberflächenstruktur 9.

In der Zeichnung ist eine Erwärmung zum Aufschmelzen der Fügezone 11 der Kunststoffplatte 3 mit einem Laserstrahl 12 dargestellt, der durch die Kunststoffplatte 3 hindurch auf die Fügefläche 4 der Metallplatte 2 gerichtet ist und wie mit den einander im Laserstrahl 12 kreuzenden Pfeilen angedeutet über die gesamte Fügefläche 4 geführt wird. Für diese Art der Erwärmung ist der Thermoplast, aus dem die Kunststoffplatte 3 besteht, transparent für eine Lichtwellenlänge des Laserstrahls 12. Der Laserstrahl 12 erwärmt die Fügefläche 4 der Metallplatte 2 und ggf. die die Oberflächenstruktur 9 bildenden Stifte 5. Die erwärmten Stifte 5 und die erwärmte Fügefläche 4 erwärmen die Kunststoffplatte 3 von der Fügefläche 4 her bis zu einem Aufschmelzen ihrer Fügezone 11.

Zum Erwärmen und Fügen werden die Metallplatte 2 und die Kunststoffplatte 3 gegeneinander gedrückt, so dass die die Oberflächenstruktur 9 der Metallplatte 2 bildenden Stifte 5 in die Kunststoffplatte 3 eindringen und die Kunststoffplatte 3 in Anlage an die Fügefläche 4 der Metallplatte 2 gelangt. Dadurch werden die Stifte 5 oder allgemein die Oberflächenstruktur 9 der Metallplatte 2 in den Thermoplast der Kunststoffplatte 3 eingebettet und der in der Fügezone 11 aufgeschmolzene Kunststoff dringt in die Hinterschneidungen 7 der Oberflächenstruktur 9 der Metallplatte 2 ein, sofern solche Hinterschneidungen 7 vorhanden sind. Nach einem Abkühlen des Kunststoffs sind die Metallplatte 2 und die Kunststoffplatte 3 stoffschlüssig und zusätzlich gegen Schubkräfte parallel zur Fügefläche 4 durch die in den Kunststoff eingebettete Oberflächenstruktur 9 der Metallplatte 2 formschlüssig verbunden. Hinterschneidungen 7 der Oberflächenstruktur 9 der Metallplatte 2 bilden zusätzlich einen Formschluss gegen Zugbeanspruchungen senkrecht zur Fügefläche 4.

Die Stifte 5 sind so hoch, dass sie zwischen Fasern der Faserverstärkung 10 der Kunststoffplatte 3 ragen. Allgemein gesprochen, ist die Oberflächenstruktur 9 der Metallplatte 2 so tief bzw. hoch, dass sich Fasern der Faserverstärkung 10 der Kunststoffplatte 3 in der Oberflächenstruktur 9 der Metallplatte 2 befinden. Es ist also ein Abstand oberflächennaher Fasern der Faserverstärkung 10 von einer Oberfläche der Kunststoffplatte 3 bzw. von der Fügefläche 4 kleiner als die Stifte 5 der Metallplatte 2 hoch oder allgemein die Oberflächenstruktur 9 der Metallplatte 2 tief bzw. hoch ist. Dadurch bewirken auch die Stifte 5 bzw. allgemein die Oberflächenstruktur 9 der Metallplatte 2 einen Formschluss auch mit Fasern der Faserverstärkung 10 der Kunststoffplatte 3 parallel zur Fügefläche 4 und bei Vorhandensein von Hinterschneidungen 7 an den Stiften 5 bzw. an der Oberflächenstruktur 9 der Metallplatte 2 auch einen Formschluss mit Fasern der Faserverstärkung 10 der Kunststoffplatte 3 gegen Zugkräfte senkrecht zur Fügefläche 4.

Zum Aufschmelzen der Fügezone 11 der Kunststoffplatte 3 zum Fügen mit der Metallplatte 2 kann die Metallplatte 2 auch von einer der Kunststoffplatte 3 abgewandten Seite mit einem Laser oder in anderer Weise erwärmt werden (nicht dargestellt). Denkbar ist auch ein Erwärmen der Fügezone 11 der Kunststoffplatte 3 von der Oberfläche her und ein Aufsetzen auf die Metallplatte 2 so lange der Kunststoff in der Fügezone 11 warm und dadurch aufgeschmolzen ist.

## Patentansprüche

1. Metall-Kunststoff-Verbundteil, wobei der Kunststoff (3) eine Faserverstärkung (10) und das Metall (2) eine in den Kunststoff eingebettete Oberflächenstruktur (9) aufweist, **dadurch gekennzeichnet, dass** die Oberflächenstruktur (9) des Metalls (2) in die Faserverstärkung (10) des Kunststoffs (3) ragt.

2. Metall-Kunststoff-Verbundteil nach Anspruch 1, **dadurch gekennzeichnet, dass** das Metall-Kunststoff-Verbundteil (1) ein Schichtverbundteil ist.

3. Metall-Kunststoff-Verbundteil nach Anspruch 1 oder 2, **dadurch gekennzeichnet, dass** der Kunststoff (3) ein Thermoplast ist.

4. Metall-Kunststoff-Verbundteil nach einem der vorhergehenden Ansprüche, **dadurch gekennzeichnet, dass** die Faserverstärkung (10) des Kunststoffs (3) Langfasern und/oder Endlosfasern aufweist.

5. Metall-Kunststoff-Verbundteil nach einem der vorhergehenden Ansprüche, **dadurch gekennzeichnet, dass** Fasern der Faserverstärkung (10) des Kunststoffs (3) direktional sind.

6. Metall-Kunststoff-Verbundteil nach einem der vorhergehenden Ansprüche, **dadurch gekennzeichnet, dass** die Oberflächenstruktur (9) des Metalls (2) Hinterschneidungen (7) aufweist.

7. Metall-Kunststoff-Verbundteil nach Anspruch 6, **dadurch gekennzeichnet, dass** sich Hinterschneidungen (7) der Oberflächenstruktur (9) des Metalls (2) tiefer im Kunststoff (3) befinden als Fasern der Faserverstärkung (10) des Kunststoffs (3).

8. Metall-Kunststoff-Verbundteil nach einem der vorhergehenden Ansprüche, **dadurch gekennzeichnet, dass** das Metall (2) eine raue Oberfläche als Oberflächenstruktur (9) aufweist.

9. Metall-Kunststoff-Verbundteil nach einem der vorhergehenden Ansprüche, **dadurch gekennzeichnet, dass** die Oberflächenstruktur (9) des Metalls (2) ein Gitter, Gewebe, Gewirke oder Gestrick aufweist.

10. Metall-Kunststoff-Verbundteil nach einem der vorhergehenden Ansprüche, **dadurch gekennzeichnet, dass** die Oberflächenstruktur (9) des Metalls (2) abstehende Vorsprünge aufweist.

11. Verfahren zur Herstellung eines Metall-Kunststoff-Verbundteils nach einem der vorhergehenden Ansprüche, **dadurch gekennzeichnet, dass** die Oberflächenstruktur (9) durch Oberflächenbearbeitung des Metalls (2) hergestellt ist.

12. Verfahren zur Herstellung eines Metall-Kunststoff-Verbundteils nach einem der Ansprüche 1 bis 11, **dadurch gekennzeichnet, dass** die Oberflächenstruktur (9) durch Fügen am Metall (2) angebracht ist.

13. Verfahren zur Herstellung eines Metall-Kunststoff-Verbundteils nach einem der Ansprüche 2 bis 11, **dadurch gekennzeichnet, dass** der Kunststoff (3) zumindest in einer Fügezone (11) mit dem Metall (2) auf mindestens eine Erweichungstemperatur erwärmt und in erwärmtem Zustand mit dem Metall (2) gefügt wird, wobei sich der Kunststoff (2) in die Oberflächenstruktur (9) des Metalls (2) einformt.

14. Verfahren nach Anspruch 13, **dadurch gekennzeichnet, dass** der Kunststoff (2) durch Laserstrahlung (12) erwärmt wird.
